**Europäisches Patentamt**

**European Patent Office**

**Office européen des brevets**

(19)

(11) Numéro de publication : **0 516 754 B1**

# (12) FASCICULE DE BREVET EUROPEEN

(45) Date de publication du fascicule du brevet :
**19.07.95 Bulletin 95/29**

(51) Int. Cl.$^6$ : **G01T 1/164**

(21) Numéro de dépôt : **91906204.2**

(22) Date de dépôt : **25.02.91**

(86) Numéro de dépôt international :
**PCT/FR91/00152**

(87) Numéro de publication internationale :
**WO 91/13372 05.09.91 Gazette 91/21**

(54) **TOMOGRAPHE PERFECTIONNE A DETECTION DE RAYONS GAMMA.**

(30) Priorité : **23.02.90 FR 9002289**

(43) Date de publication de la demande :
**09.12.92 Bulletin 92/50**

(45) Mention de la délivrance du brevet :
**19.07.95 Bulletin 95/29**

(84) Etats contractants désignés :
**DE GB IT NL**

(56) Documents cités :
**DE-A- 2 351 450**
**DE-A- 2 461 877**
**FR-A- 2 471 610**
**GB-A- 2 030 422**
**US-A- 3 509 341**
**JOURNAL OF NUCLEAR MEDECINE, vol. 12,**
**no. 8, August 1971, P. Spiegler: "Approximate**
**expression for the geometric response and**
**the index of resolution of focused collima-**
**tors", pp. 547-555**

(73) Titulaire : **UNIVERSITE PAUL SABATIER
(TOULOUSE III)
118 Route de Narbonne
F-31062 Toulouse Cédex (FR)**

(72) Inventeur : **DANET, Bernard
74 bis, rue Alfred-Duméril
F-31400 Toulouse (FR)**
Inventeur : **GANTET, Pierre
11, rue Jacques-Cartié
F-31520 Ramonville-Saint-Agne (FR)**
Inventeur : **ARAGON, Bernard
39, Le Pré Saint-Séverin
F-31320 Auzeville (FR)**
Inventeur : **GUIRAUD, Robert
36, rue Moulet
F-31400 Toulouse (FR)**
Inventeur : **ROUX, Georges (décédé)
(ö)**

(74) Mandataire : **Schmit, Christian Norbert Marie
et al
Cabinet Ballot-Schmit
7, rue Le Sueur
F-75116 Paris (FR)**

## Description

La présente invention a pour objet un tomographe perfectionné à détection de rayons gamma. Elle trouve particulièrement son application dans le domaine de la médecine nucléaire mais pourrait également être utilisée en contrôle industriel. Elle vise à augmenter les performances en résolution spatiale et en sensibilité des tomographes à rayons gamma de l'état de la technique. La tomographie dont il est question ici est la tomographie d'émission de type reconstruite, identique à celle connue dans le domaine des tomodensitomètres à rayons X.

La tomographie de type reconstruite permet de présenter des images de coupe d'un corps. Ces images de coupe sont reconstruites à partir d'images en projection obtenues alors qu'un détecteur tourne autour d'un axe passant par un corps à étudier, et perpendiculaire aux images de coupe à produire. Dans le domaine des rayons X l'image en projection est généralement une image en projection ligne : le détecteur comporte une rangée de détecteurs alignés, en face du tube à rayons x, dans le plan de la coupe. Dans des développements récents cependant l'image en projection est une image en projection à deux dimensions : le détecteur comporte une pluralité de cellules détectrices organisées selon deux axes perpendiculaires à l'axe principal d'émission X.

Dans le domaine de la médecine nucléaire, les images en projection sont des images, dès l'origine, à deux dimensions. Ces images en projection à deux dimensions sont liées à la structure des gamma caméras utilisées dans les tomographes. Une gamma caméra, en effet, est utilisée en médecine nucléaire pour visualiser dans un organe la répartition de molécules marquées par un isotope radioactif injectées à un patient. Ainsi, une gamma caméra comprend un collimateur pour focaliser des photons gamma émis par le corps du patient, un cristal scintillateur pour transformer les photons gamma en photons lumineux ou scintillations, et un réseau de tubes photo-multiplicateurs qui transforment, chacun, les scintillations en impulsions électriques. Le scintillateur et le collimateur sont normalement constitués par des dalles planes : les images en projection selon une orientation principale du scintillateur perpendiculaire à son plan, sont des images à deux dimensions. Une gamma caméra comprend, en outre, des circuits électroniques pour produire à partir des signaux électriques fournis par les tubes, des signaux de coordonnées X et Y de lieux sur le scintillateur où se sont produites les scintillations. Une telle chaîne de détection est suivie d'un ensemble de traitement et visualisation, qui permet d'obtenir une image en projection de la répartition des isotopes radioactifs dans le patient pendant la durée de l'acquisition de l'image.

Entre autres qualités, une gamma caméra doit posséder une bonne résolution spatiale, c'est-à-dire la capacité de distinguer des petites sources radioactives rapprochées, et une bonne réponse en taux de comptage, c'est-à-dire la capacité de traiter un grand nombre de photons gamma par unité de temps. La résolution spatiale dépend de la précision du calcul des coordonnées X et Y. La qualité de l'élaboration de ces coordonnées dépend essentiellement des lois physiques régissant le fonctionnement des différentes parties de la gamma caméra. Ainsi, l'interaction d'un photon gamma avec le cristal donne naissance à une scintillation lumineuse dont l'intensité décroît exponentiellement avec le temps. La constante de temps de cette décroissance est caractéristique du cristal scintillateur utilisé; pour un cristal d'iodure de sodium activé au thallium NaI(T1), elle est de l'ordre de 250 nanosecondes.

Une scintillation est vue par plusieurs tubes photo-multiplicateurs simultanément. Les photons lumineux composant cette scintillation arrachent des photo-électrons aux photo-cathodes des tubes photo-multiplicateurs. Le nombre de photo-électrons ainsi arrachés obéit, pour une scintillation d'énergie donnée, à une loi statistique de Poisson. Ceci signifie que le signal électrique délivré par un tube photo-multiplicateur recevant une scintillation, a une amplitude dont la valeur suit une distribution statistique de Poisson et dont la valeur moyenne est fonction de l'énergie des photons lumineux incidents.

On peut admettre ainsi qu'un rayon gamma donne naissance, dans un scintillateur, à une dizaine de milliers de photons. Le rendement des tubes photo-multiplicateurs est en général faible, de l'ordre de dix pour cent. Il en résulte que pour une scintillation donnée, seulement plusieurs centaines de photons lumineux (par exemple 700) sont détectés par le tube photo-multiplicateur. Mais pour ces photons détectés, le signal électrique délivré par le tube photo-multiplicateur est fluctuant selon la loi de Poisson évoquée. Cette fluctuation est due au mode de détection par les tubes : il s'agit d'arrachage d'électrons sur les dynodes des tubes. Du fait du caractère quantique de cet arrachage, et du faible nombre d'arrachements effectifs, on est obligé de tenir compte du phénomène statistique.

Une scintillation est normalement omnidirectionnelle. Le scintillateur absorbe en lui-même une partie de l'énergie des scintillations avant de délivrer les photons lumineux, de telle façon que, au fur et à mesure que l'on s'éloigne de l'endroit où s'est produite la scintillation, l'énergie lumineuse émise par le scintillateur décroît exponentiellement. Ceci a deux conséquences : d'une part, une scintillation va exciter de cette manière plusieurs tubes photo-multiplicateurs, d'autre part, cette décroissance exponentielle elle-même va être mise à profit pour pouvoir recalculer, à partir de l'ensemble des signaux fournis par tous les photo-multiplicateurs, le lieu où s'est produite la scintillation. Un tel calcul est par exemple décrit dans la demande de brevet français n° 83 08825 déposée le 27 Mai 1983. Les images ainsi acquises en projection ont couramment une résolution de l'ordre de 5 mm : ce qui signifie que l'on est capable, avec de telles images, de différencier dans l'image deux objets distants l'un de l'autre d'au moins 5 mm, ou des objets plus grands que 5 mm.

Pour effectuer les tomographies, il est nécessaire d'acquérir un certain nombre de ces images en projection à deux dimensions, alors qu'une direction principale d'examen de la gamma caméra occupe différentes orientations par rapport au corps. Ces différentes orientations sont obtenues en montant la gamma caméra sur un statif susceptible de la faire tourner autour d'un axe passant, au travers du corps, perpendiculairement aux coupes à produire.

Les collimateurs utilisés dans les gamma caméras sont assimilés à une plaque plane épaisse en un matériau opaque aux rayons gamma dans laquelle sont réalisés des trous allongés, tous parallèles les uns aux autres. Ces trous sont orientés perpendiculairement aux plans du collimateur et du scintillateur. Ils permettent d'éviter les effets de diffusé des rayons gamma, ainsi que d'éliminer les rayons gamma qui ne se propageraient pas perpendiculairement au plan du scintillateur. En conséquence, les scintillations se produisent normalement dans le scintillateur à l'aplomb, en projection droite, de l'endroit où les émissions gamma se sont produites dans le corps.

La mise en oeuvre des algorithmes connus de reconstruction d'images tomographiques nécessite alors de convertir les images en projection à deux dimensions ainsi acquises en des images-lignes en projection. Si on admet que l'axe de rotation de la gamma caméra est orienté parallèlement à Y et que les images en projection à deux dimensions possédant des éléments d'image alignés parallèlement à Y d'une part et parallèlement à X (perpendiculaire à Y) d'autre part, il est nécessaire, pour acquérir une image-ligne, de ne prendre en considération que les éléments de l'image en projection qui se situent dans une bande d'image parallèle à X. Cette bande doit toujours être choisie au même endroit dans les différentes images en projection concernées. Ces images lignes permettent de reconstruire l'image d'une tranche examinée. Cette tranche correspondant, pendant l'examen, à l'aplomb de ces bandes.

Selon un tel procédé, on peut théoriquement reconstruire autant d'images en coupe dans le corps que l'on est susceptible de réaliser de bandes dans les images en projection. Ainsi, si on divise une image en projection en 20 bandes, et si on effectue les traitements à chaque fois sur des bandes correspondantes, on peut obtenir 20 images en coupe. Pour un champ examiné de l'ordre de 20 cm, on obtient ainsi des images de tranches dont l'épaisseur vaut 1 cm.

Mais ceci n'est en fait que le résultat théorique. En pratique, on peut montrer que la largeur réelle de la tranche prise en compte par une bande, avec une telle sélection, dite de type électronique, va en s'évasant depuis un côté dont l'épaisseur est égale à la largeur de la bande, jusqu'à l'autre. L'augmentation d'épaisseur de la tranche varie avec la largeur des trous et varie inversement proportionnellement à la longueur des trous. En outre, on peut montrer que la sensibilité de détection varie énormément selon que le lieu d'où émane l'émission gamma dans la tranche est proche de l'axe de rotation de la gamma caméra ou s'en éloigne. La solution qui consisterait à réduire les dimensions des trous se heurte à une baisse trop importante de la sensibilité : l'angle solide qui éclaire une surface élémentaire du scintillateur se réduit en effet comme le carré de la réduction des trous. Compte tenu de la nature omnidirectionnelle des rayons gamma émis, le nombre des rayons gamma détectés se réduirait en correspondance, ce qui diminuerait le rendement de la gamma caméra.

Dans l'invention, on a ainsi pu déterminer que la sensibilité de détection à l'égard d'un élément de volume unitaire de l'objet à reconstruire - cette sensibilité étant exprimée par le nombre d'informations reçu par seconde et par cm3 de cet objet, pour une activité radioactive donnée - conduit à modifier la forme du collimateur. Ce faisant, on s'est alors rendu compte dans l'invention que cette modification du collimateur permettait d'obtenir par ailleurs une variation minimale de cette sensibilité en fonction de la profondeur de détection dans la tranche. Ceci permet d'assurer une modélisation précise du détecteur dans l'algorithme de reconstruction.

Dans l'état de la technique, pour augmenter la sensibilité de détection tout en conservant une résolution spatiale acceptable, on a pu avoir recours à l'augmentation du nombre des gamma caméras tournant autour du patient. Cette solution présente, entre autres les désavantages suivants. Elle n'augmente pas la sensibilité dans la direction de projection correspondant à une orientation donnée. Elle permet seulement d'aller plus vite au moment de l'acquisition compte tenu de ce que plusieurs projections sont acquises, simultanément, selon plusieurs directions différentes. Dans une autre solution, décrite dans une demande de brevet européen EP-A-3 509 341 il a été proposé une ou des couronnes de détecteurs. Ces solutions présentent l'inconvénient que le champ d'examen est petit. En pratique il est réduit de telle façon que seul le cerveau humain peut être examiné. En outre, les collimateurs ne peuvent pas être changés pour permettre l'examen de gamma d'énergie supérieure à 200 Kev.

Le document US-A-3 509 341 ou le document EP-A-0 289 737 enseignent l'utilisation d'un collimateur focalisé en médecine nucléaire. Cependant, ces documents ne concernent pas la tomographie ou qu'une tomographie partielle, et de plus, le point focal du collimateur est placé dans le patient. Le document DE-A-2 351 450 reprend des mêmes éléments. Le document FR-A-2 471 610, outre qu'il n'est même pas du domaine de la médecine nucléaire, ne concerne que des tomographies dites en transmission, avec un rayonnement X qui traverse le patient, alors que l'invention concerne des tomographies en émission dans lesquelles le foyer d'émission des rayons gamma est dans le corps. Comme on le verra, l'invention montre qu'il y a une amélioration de la résolution des images produites par rapport à ces enseignements, lorsque le foyer du collimateur est fixé au-delà du corps du patient, alors que le foyer d'émission des rayons gamma est dans le corps du patient.

L'invention a pour objet de remédier à ces inconvénients en choisissant a priori l'épaisseur de la tranche dans laquelle on cherche à faire l'image. L'épaisseur de la tranche n'est alors pas le résultat d'une déduction, a posteriori, de la localisation et de l'épaisseur des bandes utilisées dans les images en projection. Dans l'invention on focalise la détection sur les émissions de rayons gamma qui se produisent dans ces tranches. Cette focalisation a par ailleurs un effet d'agrandissement, de loupe, du fait qu'elle consacre, du côté des tubes photo-multiplicateurs, une largeur du scintillateur plus grande que l'épaisseur de la tranche examinée. Ceci est obtenu par une focalisation convergente du collimateur en direction de la tranche concernée. Ce faisant, on augmente la sensibilité d'une part, et on peut voir par ailleurs que cette sensibilité est alors sensiblement la même partout dans la tranche, quelle que soit la profondeur dans le corps où se produisent les émissions gamma concernées. En simplifiant, dans l'invention, la largeur de la "bande détectrice" affectée à l'épaisseur d'une tranche est plus grande que cette épaisseur de tranche.

On peut acquérir ainsi des images-lignes en projection concernant plusieurs tranches simultanément. Ultérieurement on déplace longitudinalement la gamma caméra, et on réitère l'opération totale d'acquisition pour des tranches entrelacées avec les premières tranches déjà acquises. On montrera que malgré cette répétition, la réalisation d'un ensemble de tomographies "jointives" est plus rapide que dans l'état de la technique, compte tenu du gain en sensibilité de la gamma caméra.

L'invention a donc pour objet un tomographe à détection de rayons gamma comportant :

- un panneau porte-patient pour supporter un patient à examiner,
- une gamma caméra et un statif portant cette gamma caméra, ce statif comportant des moyens pour faire tourner la gamma caméra autour d'un axe passant au travers du corps du patient, et
- des moyens pour acquérir des images en projection du corps pour différentes orientations du statif,
- des moyens de traitement d'images pour produire des images en tomographie reconstruites à partir de ces images en projection délivrées par la gamma caméra,
- la gamma caméra comportant, sur le trajet des rayons gamma depuis le corps du patient, un dispositif de collimation, un organe scintillateur, et un réseau de tubes photo-multiplicateurs,
- ces tubes délivrant des signaux électriques et la gamma caméra comportant encore des circuits électroniques pour produire les images en projection du corps du patient à partir des signaux électriques délivrés par les tubes,
- le dispositif de collimation portant un ensemble de trous allongés réalisés au travers d'une épaisseur d'un matériau opaque au rayon gamma, caractérisé en ce que
- le dispositif de collimation comporte un jeu de plusieurs arrangements de trous, chaque arrangement de trous comportant des séries de trous focalisant les rayons gamma, les trous possédant une base, proche du corps, et un sommet, proche du scintillateur, la surface de la section de la base d'un trou étant plus petite que celle de son sommet,
- les milieux des bases de deux trous voisins, dans deux séries voisines quelconques dans un arrangement, étant plus proche l'un de l'autre que les milieux des sommets de ces trous,
- les trous possédant chacun une direction principale passant par les milieux de leur base et de leur sommet, et en ce que,
- une direction principale des trous d'une même série est contenue dans un plan focal, ce plan focal définissant, avec les autres plans focaux des autres séries d'un même arrangement, une tranche de tomographie relative à cet arrangement.

L'invention sera mieux comprise à la lecture de la description qui suit et à l'examen des figures qui l'accompagnent; celles-ci ne sont données qu'à titre indicatif et nullement limitatif de l'invention. Les figures montrent :

- figure 1 : la représentation schématique globale d'un tomographe conforme à l'invention ;
- figures 2 a et 2 b : des représentations comparées de la structure d'un collimateur selon l'invention et selon l'état de la technique respectivement ;
- figure 3 a et 3 b : des représentations comparées des statistiques de détection relatives à l'invention et à l'état de la technique respectivement.
- figure 4 : un perfectionnement des collimateurs de l'invention ;
- figure 5, 6 et 7 : des exemples de réalisation des collimateurs selon l'invention.

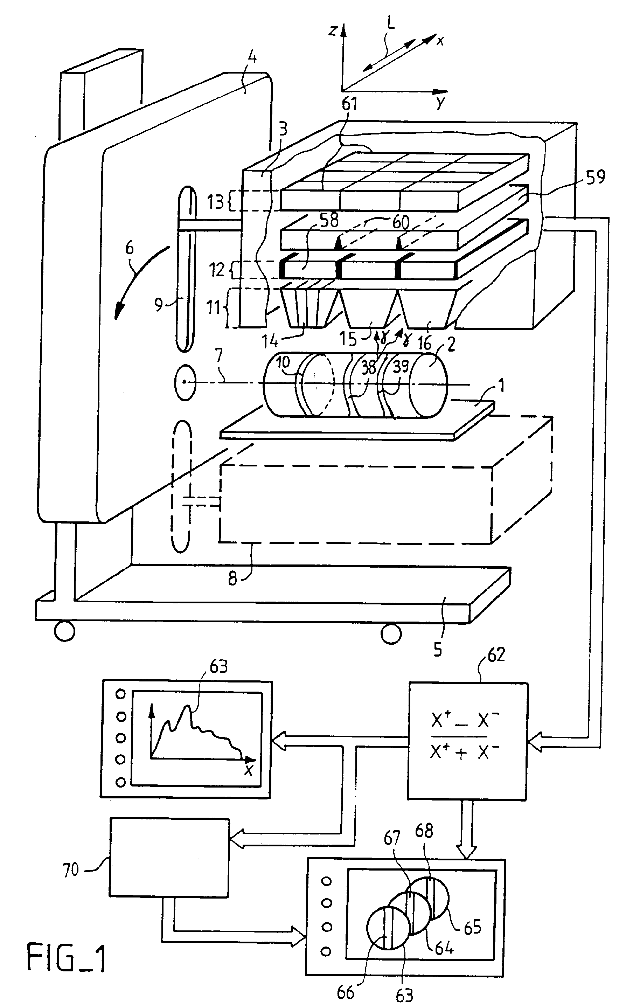

La figure 1 montre un tomographe conforme à l'invention. Ce tomographe comporte un panneau porte-patient 1 pour porter un patient schématiquement représenté par un cylindre 2. Le tomographe comporte une gamma caméra 3 et un statif 4 porté par un pied 5. Le statif peut tourner selon la flèche 6 autour d'un axe 7 passant sensiblement par le milieu du corps 2. Dans un perfectionnement, pour accélérer l'acquisition, le statif peut comporter une deuxième gamma caméra 8 identique à la première 3 et située symétriquement à celle-ci par rapport à l'axe 7. D'autres réalisations sont également possibles qui ne limitent pas le champ examiné ni les possibilités d'accès au patient. La gamma caméra 3 peut par ailleurs être approchée ou éloignée du corps 2 par un mécanisme d'écartement 9. Ce mécanisme d'écartement est tel que, même s'il n'y a qu'une seule gamma caméra 3, le statif est toujours équilibré en rotation par rapport à l'axe 7.

La gamma caméra comporte des moyens pour acquérir des images en projection du corps alors qu'elle occupe différentes orientations par rapport à ce corps. Ces moyens d'acquisition comportent, sur le trajet des rayons gamma émis depuis une tranche telle que 10 dans le patient, un dispositif de collimation 11, un organe scintillateur 12 et un réseau 13 de tubes photo-multiplicateurs. Les tubes délivrent des signaux électriques correspondant à des scintillations produites par le scintillateur 12, en réaction à des excitations par des photons gamma. Les signaux électriques sont traités dans des circuits électroniques 62 pour produire des images en projection des tranches 10 du corps du patient. Le traitement dont il est question dans ces circuits 62 est, par exemple, du type de celui décrit dans le brevet français ci-dessus référencé.

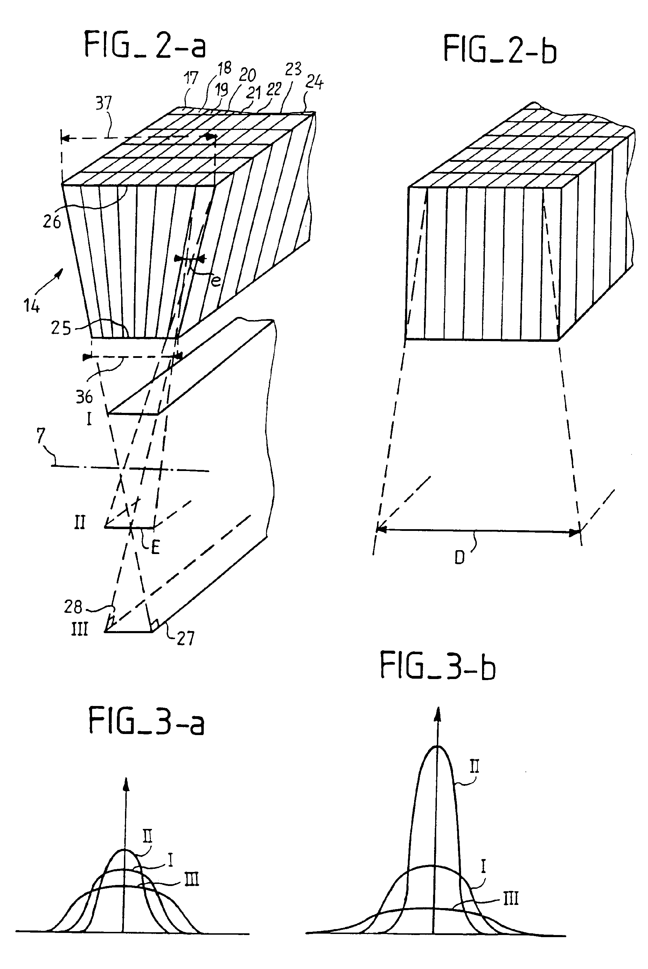

Ce qui caractérise l'invention est la particularité de focalisation des trous du collimateur de l'invention. Cette focalisation est symbolisée, dans la figure 1, par le caractère trapézoïdal des arrangements de trous du collimateur 11. Dans cette figure, on a montré trois arrangements de trous, placés côte à côte, et numérotés 14 à 16. En pratique, un tomographe peut en comporter cinq, voire même plus. Chaque arrangement de trous possède des séries de trous. Dans un exemple référé, chaque arrangement possède huit séries de trous. Pour ne pas surcharger le dessin dans la figure 1, l'arrangement 14 est montré seulement avec quatre séries de trous. Par contre la figure 2 a montre que l'arrangement 14 possède huit séries de trous notées 17 à 24. Les trous possèdent une base, par exemple la base 25, proche du corps. Ils possèdent également en correspondance un sommet 26, proche du scintillateur. La surface de la section de la base d'un trou est plus petite que celle de son sommet. Ceci signifie que les trous vont en s'évasant à partir de leur base. Un trou possède une direction principale passant par les milieux de sa base et de son sommet.

Par ailleurs, les milieux des bases de deux trous voisins, dans deux séries voisines quelconques, par exemple les séries 20 et 21, d'un même arrangement, sont plus proches l'un de l'autre que les milieux des sommets de ces trous. Ceci signifie par ailleurs que les directions principales de trous voisins appartenant à deux séries distinctes voisines, vont se rapprochant l'une de l'autre en direction du corps. Enfin, les directions principales des trous d'une même série, sont contenues dans un même plan correspondant à cette série. Les différents plans des séries appartenant à un même arrangement traversent le corps et délimitent ensemble l'épaisseur de la tranche.

On a ainsi schématiquement représenté sur la figure 2a le plan focal 27 correspondant à la série de trous 17 et le plan focal 28 correspondant à la série de trous 24. Ces deux plans focaux délimitent dans le corps, non représenté, une tranche dont le profil a la forme d'un tromblon. On peut montrer, que compte tenu de l'ouverture 14 des trous, la tranche ainsi sélectionnée a une épaisseur minimum située au milieu et déterminée d'une part par la valeur de E et d'autre part par l'éloignement de ce milieu par rapport au collimateur. L'épaisseur E de la tranche au milieu du tromblon est alors peu différente, par exemple la moitié, de l'épaisseur de la tranche de part et d'autre de ce milieu.

Par contre, comme la figure 2b le montre, dans les mêmes conditions avec un collimateur à trous parallèles de l'état de la technique et avec des trous de dimensions comparables, on constate que l'épaisseur à mi-hauteur de la tranche sélectionnée correspond aux émissions de rayons gamma qui prennent naissance dans une largeur D, sans aucune comparaison avec ce qui passe dans la faible largeur E selon l'invention. Par ailleurs le nombre des émissions gamma détectées est aussi important dans un cas que dans l'autre. Mais comme dans l'invention les émissions ne proviennent que d'une tranche, on augmente la sensibilité relative à cette tranche. En conséquence la détermination, a priori, dans l'invention de l'épaisseur de la tranche est tout à fait avantageuse par rapport à une sélection a posteriori, avec la sélection de bandes dans les images en projection à deux dimensions obtenues par la gamma caméra munie d'un collimateur classique à trous parallèles.

L'avantage de l'invention est obtenu parce que tous les plans focaux des séries 17 à 24 se coupent sensiblement selon l'axe 7 de rotation. Par ailleurs, en des régions I, II, III, situées à des profondeurs différentes dans le corps, on peut montrer que, avec l'invention, la loi statistique de détection varie peu alors qu'elle varie énormément dans l'état de la technique. En effet, comme les figures 3a et 3b le montrent, la sensibilité de détection pour les régions I II et III est sensiblement constante avec l'invention, alors qu'elle connaît une augmentation très importante pour la région centrale II dans l'état de la technique. Cette sensibilité plus forte est tout simplement liée à l'épaisseur prise en compte plus forte pour une même bande dans chaque image en projection.

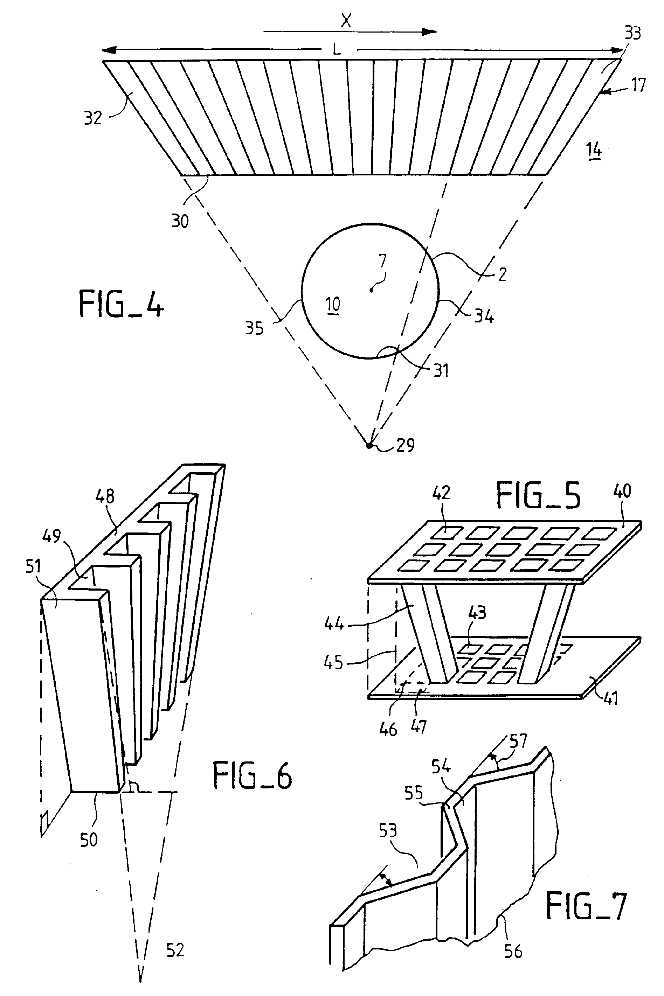

La figure 4 montre une autre particularité du collimateur selon l'invention. En effet, selon la direction X (perpendiculaire à la direction Y qui est parallèle à l'axe 7 : voir figure 1) les trous de collimation d'une série sont de plus focalisés, dans le plan focal de leur série, vers un point focal 29. La figure 4 montre ainsi, au dessus du corps 2, dans l'arrangement 14, la série de trous 17. De préférence, le point focal 29 se trouve plus éloigné du plan inférieur 30 du scintillateur 11 que le milieu 7 du corps 2 ou même que la partie la plus éloignée 31 de ce corps 2 par rapport au scintillateur 11. Dans un exemple où un arrangement de collimations a une longueur L sensiblement égale à 56 cm, la distance qui sépare le plan 30 du point focal 29 est du même ordre de grandeur que L. On montre facilement que, là encore, on obtient un gain de sensibilité très important parce que tous les trous du collimateur voient le corps 2, quelle que soit l'orientation du statif 4.

En pratique le point focal 29 est choisi à une distance telle que les trous les plus extrêmes, 32 33 de la série 17 dans l'arrangement 14, voient les bords latéraux 34 et 35 respectivement du corps 2. On peut montrer que le phénomène d'agrandissement ainsi provoqué, d'une part par l'intersection des plans selon l'axe 7 et d'autre part par les directions principales des trous d'une série se coupant, dans le plan focal de cette série, en un point 29, conduit à une amélioration de la sensibilité qui permet à la caméra d'acquérir beaucoup plus rapidement une image ligne en projection, par exemple celle d'une tranche 10.

Dans un exemple de réalisation, la largeur 36 de la base d'un arrangement de trous est de l'ordre de 4 cm, la largeur 37 du sommet de cet arrangement est de l'ordre de 6 cm : du même ordre de grandeur que celui de l'encombrement connu des tubes photo-multiplicateurs. Dans cet exemple, la largeur, ou l'épaisseur efficace des tranches, est de l'ordre de 1,3 cm. Autrement dit, pour un encombrement de 6 cm, on acquiert l'image d'une tranche de 1,3 cm. Sur la figure 1 on constate que les arrangements 14, 15, 16 et suivants sont contigus de sorte que les tranches 10, 38, 39 et suivantes, que chacun de ces arrangements voit respectivement, sont distantes les unes des autres d'environ 6 cm. Les tranches 10, 38, 39 etc... ne sont pas contiguës. Pour que les tranches explorées soient contiguës ou jointives, il convient de déplacer la gamma caméra 3 (ou les gamma caméras 3 et 8) dans le sens Y, d'une longueur égale à la largeur d'une tranche acquise. On constate alors qu'en cinq déplacements successifs, on peut construire cinq groupes d'images tomographiques entrelacées les unes sur les autres : 5 x 1,2 cm = 6 cm.

Compte tenu de la plus grande sensibilité obtenue avec le scintillateur de l'invention, on a pu limiter la durée d'acquisition de l'ensemble des images en projection à environ six minutes pour une activité, au centre du corps, de 100 impulsions / μCi / cm3 . En six minutes on effectue ainsi, pour chacun des arrangements 14, 15 ou 16 et suivants, 64 projections lignes selon 64 orientations différentes du statif autour du corps 2. La durée d'acquisition, pour chaque projection, est de l'ordre de 5 secondes si on utilise les deux gamma caméras 3 et 8. Au bout de six minutes, on déplace le statif 3 dans le sens Y d'un pas égal à l'épaisseur d'une tranche. On réitère l'opération ainsi cinq fois de suite. En définitive, au bout de 30 minutes, on a acquis les projections nécessaires pour reconstruire 5 x N images tomographiques dans le corps 2. N est le nombre des arrangements de séries de trous du collimateur 11.

Les figures 5, 6 et 7 montrent différentes manières de fabriquer les arrangements de trous des collimateurs selon l'invention. Dans le premier exemple, représenté par la figure 5, on utilise deux plaques de cuivre 40 et 41 percées chacune d'autant de trous que doivent en contenir les arrangements. Ces trous tels que 42 et 43, respectivement dans les plaques 40 et 41, sont disposés dans ces plaques à l'endroit que sont censés occuper les orifices de ces trous dans le collimateur une fois qu'il sera fait. Les trous 42 dans la plaque 40 sont plus gros et moins resserrés que les trous 43 dans la plaque 41. On fabrique par ailleurs des aiguilles coniques 44, à section carrée, dont les pointes plus fines sont engagées dans les trous 43 et dont les bases plus grosses sont engagées dans les trous 42. Sur la figure 5, une verticale d'aplomb 45 et des axes de référence horizontaux 46 47 montrent le caractère focalisant de la disposition des aiguilles 44 entre les deux plaques 41 et 40. Une fois que toutes les aiguilles 34 ont été mises en place entre les trous 42 et 43 des plaques, on glisse l'ensemble dans un moule et on coule du plomb fondu de manière à ce que le plomb occupe la place laissée libre entre les aiguilles. Après refroidissement, on démoule et on chasse les aiguilles vers les plus gros trous 42.

La figure 6 montre un autre exemple de réalisation plus simple. Dans celui-ci on utilise une tôle épaisse en plomb 48 dans laquelle on a taillé des rainures telles que 49. La tôle 48 possède la particularité de ne pas être plane mais de comporter au contraire un bord 50 moins épais qu'un bord opposé 51. Le bord 50 est destiné à être placé près du corps, la tôle étant dressée sur chant. Le bord 50 n'est pris moins épais que le bord 51, que dans la mesure où l'on cherche à obtenir la focalisation sur le point 29 (figure 4). Les rainures 49 sont réalisées d'un bord à l'autre, sur une même face de la tôle 48, de telle façon qu'elles possèdent chacune une direction moyenne tendant à concourir en un point commun 52. Ce point commun 52 appartient à une droite coupant l'axe 7 lorsque les tôles seront en place dans l'arrangement de trous correspondant du collimateur.

Pour constituer un tel arrangement, on empile les unes sur les autres autant de ces tôles rainurées qu'il y a de trous dans une série de trous de l'arrangement. Dans l'exemple de réalisation référé dans lequel la longueur L d'un arrangement est de l'ordre de 50 cm, on empile ainsi les unes contre les autres une cinquantaine de tôles rainurées de manière à produire, dans chaque série une cinquantaine de trous. Normalement, la tôle comporte autant de rainures 47 qu'il y a de séries dans l'arrangement. Ici, on n'en a montré que 4 pour simplifier le dessin.

La figure 7 montre un troisième exemple de réalisation des arrangements du collimateur selon l'invention. Plutôt que d'utiliser les tôles rainurées, on utilise là des tôles pliées de manière à ce qu'elles constituent des demi-alvéoles 53 et 54, disposées de part et d'autre de la tôle, les unes derrière les autres dans l'enfilade de la tôle, à la manière d'une tôle ondulée. Les alvéoles 53 et 54 sont, comme les rainures de la tôle 46, de moins en moins épaisses, et par ailleurs transversalement de plus en plus fines, quand on s'éloigne du bord 55 destiné à être placé près du scintillateur en direction du bord opposé 56 de la tôle qui est destiné à être placé près du corps. Pour constituer les séries de trous, des demi-alvéoles de deux tôles consécutives, décalées en alignement d'une alvéole l'une par rapport à l'autre, sont accolées l'une contre l'autre. Elles forment un réseau en nids d'abeilles assimilable aux arrangements de séries de trous vus précédemment. Dans le cas présent, d'une série à une autre, les trous sont décalés en avant ou en arrière d'un demi-pas. Il y a autant de tôles pliées selon la figure 7 qu'il y a de trous plus un dans une série de trous. On peut montrer qu'en choisissant un angle de pliure le plus grand possible proche de 90°, et en tolérant des arrondis à la pliure de 0,5 mm de rayon, on satisfait facilement aux contraintes d'absorption septale des rayons gamma dans l'épaisseur de la tôle.

Il est possible selon l'invention, d'utiliser des trous orientés parallèlement les uns aux autres dans chaque série de trous ou bien orientés vers le point focal 29. Selon le cas, on utilisera respectivement un algorithme de reconstruction des images de tomographie qui est un algorithme à faisceaux parallèles, ou un algorithme de reconstruction pour faisceaux en éventail. Cet algorithme est mis en oeuvre par des moyens 70 de traitement de type connu. On remarque que le choix du point 29, éloigné de l'extrémité la plus éloignée 31 du corps 2, permet de retenir des algorithmes de reconstruction déjà utilisés dans les tomodensitomètres à rayons X de troisième génération (algorithmes de reconstruction dits fan beam). Cette dernière procédure contribue à une meilleure sensibilité de la gamma caméra.

Pour réaliser l'organe scintillateur 12, figure 1, on utilisera de préférence des barreaux à cristaux scintillateurs tels que 58 disposés exactement à l'aplomb d'un arrangement de trous. L'épaisseur de ces barreaux est choisie selon des critères connus. On dispose entre les barreaux scintillateurs 58 et le réseau 13 des tubes photo-multiplicateurs, un conduit de lumière 59. Le conduit de lumière 59, de préférence en verre, se présente comme une dalle de verre qui recouvre l'ensemble des barreaux tel que 58. Pour éviter que des scintillations émises par un barreau 58 ne viennent exciter les photo-cathodes des tubes photo-multiplicateurs disposés à l'aplomb d'un autre arrangement voisin (arrangement 15), on réalise dans le conduit de lumière 59 des rainures telles que 60 orientées parallèlement aux arrangements et entre les différents arrangements. Dans la figure 1, les rainures ont un profil triangulaire. Leur base est orientée vers le scintillateur et leur sommet est disposé du côté du réseau 13 des tubes photo-multiplicateurs. Les rainures 60 ne sont cependant pas suffisamment profondes au point de rompre la dalle 59.

Ceci a pour premier avantage de permettre de réaliser un conduit de lumière monobloc d'une façon relativement simple. Le deuxième avantage de cette solution est d'éviter les déperditions de photons lumineux résultant de scintillations dans un barreau 58 du scintillateur, et qui se propageraient selon une direction parallèle au sens Y pour venir exciter les tubes situés à l'aplomb d'un arrangement voisin. De préférence les rainures 60 sont même remplies de magnésie qui, avec sa couleur blanche, a pour effet de réfléchir au maximum les photons de lumière diffusés vers les tubes photo-multiplicateurs qu'ils doivent exciter. De cette manière, on effectue une séparation relativement simple des émissions gamma provenant des tranches étudiées et à destination des rangées 61 de tubes photo-multiplicateurs situées à l'aplomb des barreaux 58 de scintillateur. Par ailleurs, les photons gamma réfléchis contribuent alors, par barycentration, à la localisation dans le sens X. Il n'y a alors pas perte de sensibilité.

Les tubes photo-multiplicateurs du réseau 13 sont arrangés de telle façon qu'une rangée de tubes soit disposée à l'aplomb de chaque barreau. Si les tubes sont à section carrée, l'alignement ne présente pas de difficulté. Si les tubes sont à section hexagonale, la largeur d'un barreau est égale à un côté de l'hexagone.

La première conséquence de cette manière de faire est de simplifier les calculs de barycentration du lieu où s'est produit une scintillation dans le scintillateur. En effet, comme le circuit de traitement 62 le montre, il n'est nécessaire, selon l'axe X, que de rechercher l'abscisse du lieu où s'est produite une scintillation. L'ordonnée est automatiquement acquise comme étant celle d'une rangée de tubes 61 concernée. Autrement dit, en effectuant seulement la barycentration

$$(X+ - X-) / (X+ + X-),$$

on peut obtenir directement une image en projection ligne 63, relative à l'examen de la tranche 10, pour une orientation donnée du statif 4 par rapport au corps 2.

La deuxième conséquence est que toutes les scintillations qui, normalement, avec un collimateur classique, exciteraient des tubes correspondant à des tranches adjacentes, sont maintenant prises en compte par la rangée de tubes concernée.

On a montré par ailleurs sur la figure 1 que l'utilisation classique des gamma caméras, avec des collimateurs à trous parallèles, visait à acquérir des images en projection à deux dimensions -telles que 63 à 65- correspondant à différentes orientations de la gamma caméra autour du corps 2. A partir de ces images 63 à 65, on effectuait la reconstruction en volume, en sélectionnant à chaque fois dans chacune de ces images des bandes d'images respectivement 66 à 68. Compte tenu des avantages ainsi indiqués, de préférence dans l'invention, on arrange les alignements 61 de tubes photo-multiplicateurs directement à l'aplomb, et parallèlement au sens X des barreaux 58.

**Revendications**

1. Tomographe à détection de rayons gamma comportant:
   - un panneau (1) porte-patient pour supporter un patient (2) à examiner,
   - une gamma caméra (3) et un statif (4) portant cette gamma caméra, ce statif comportant des moyens (7) pour faire tourner la gamma caméra autour d'un axe passant au travers du corps du patient, et
   - des moyens (11-13, 62-68) pour acquérir des images en projection du corps selon différentes orientations du statif par rapport au corps,
   - des moyens (70) de traitement d'image pour produire des images en tomographie reconstruite à partir de ces images en projection,
   - la gamma caméra comportant, sur le trajet des rayons gamma depuis le corps du patient, un dispositif (11) de collimation, un organe (12) scintillateur, et un réseau (13) de tubes photo-multiplicateurs,
   - ces tubes délivrant des signaux électriques, et le tomographe comportant encore des circuits électroniques (62) pour produire des signaux (X+, X-) représentatifs des images en projection du corps du patient à partir des signaux électriques délivrés par les tubes,
   - le dispositif de collimation comportant un ensemble de trous allongés réalisés au travers d'une épaisseur d'un matériau opaque aux rayons gamma,
caractérisé en ce que
   - le dispositif de collimation comporte un jeu (14-16) de plusieurs arrangements de trous, chaque arrangement de trous comportant des séries (17-24) de trous focalisant les rayons gamma, les trous possédant une base (25), proche du corps, et un sommet (26), proche du scintillateur, la surface de la section de la base d'un trou étant plus petite que celle de son sommet,
   - les milieux des bases de deux trous voisins, dans deux séries voisines quelconques dans un arrangement, étant plus proches l'un de l'autre que les milieux des sommets de ces trous,
   - les trous possédant, chacun, une direction principale passant par les milieux de leur base et de leur sommet, et en ce que
   - les directions principales des trous d'une même série sont contenues dans un même plan focal (27,28) transverse à l'axe (7) du statif (4), ce plan focal définissant, avec les autres plans focaux des autres séries d'un même arrangement, une tranche (10) de tomographie relative à cet arrangement.

2. Tomographe selon la revendication 1, caractérisé en ce que les directions principales des trous d'une même série passent ensemble par un point focal (29) situé, dans le plan focal de cette série, à une distance de l'organe scintillateur (30) supérieure à celle qui sépare cet organe scintillateur du milieu du corps.

3. Tomographe selon la revendication 2, caractérisé en ce que le point focal est situé à une distance du scintillateur sensiblement égale à la longueur (L) de cet organe scintillateur mesurée dans le sens de la série.

4. Tomographe selon l'une quelconque des revendications 1 à 3, caractérisé en ce que l'organe scintillateur comporte
   - un jeu de barreaux (58) scintillateurs disposés, chacun, en regard d'un arrangement de trous, et disposés, ensemble, en regard d'un conduit (59) de lumière,
   - ce conduit de lumière comportant une plaque unique (59) en un matériau transparent aux rayons lumineux émis par le scintillateur, et
   - cette plaque étant munie de rainures (60) orientées parallèlement aux arrangements.

5. Tomographe selon la revendication 4 caractérisé en ce que les rainures du conduit de lumière sont remplies de magnésie.

**6.** Tomographe selon l'une quelconque des revendications 1 à 5, caractérisé en ce que
- le réseau des tubes photo-multiplicateurs est organisé en alignements (X, Y), ces alignements étant rangés selon au moins une direction (X), perpendiculaire à l'axe du tomographe,
- en ce que les arrangements de séries de trous sont placés, chacun, exactement en regard d'un alignement de tubes rangés selon cette direction (X),
- et en ce que les circuits électroniques comportent des moyens pour produire une image ligne (63) en projection des émissions de rayons gamma en provenance de la tranche.

**7.** Tomographe selon l'une quelconque des revendications 1 à 6, caractérisé en ce que les arrangements de trous sont en plomb moulé (40-47).

**8.** Tomographe selon l'une quelconque des revendications 1 à 6, caractérisé en ce que les arrangements de trous comportent des assemblages de tôles ondulées (53-57).

**9.** Tomographe selon l'une quelconque des revendications 1 à 6, caractérisé en ce que les arrangements de trous comportent des assemblages de tôles rainurées (48-52).

**10.** Tomographe selon l'une quelconque des revendications 1 à 9 caractérisé en ce qu'il comporte des moyens pour que le statif soit déplaçable longitudinalement par rapport au corps, afin de produire des images de tranches de tomographies contiguës à partir d'images de tranches entrelacées.

**Patentansprüche**

**1.** Gammatomograph mit
- einem Patiententrägertisch(l) zum Unterstützen eines zu untersuchenden Patienten (2),
- einer Gammakamera (3) und einem Stativ (4), das die Gammakamera trägt und Mittel zum Drehen der Gammakamera um eine durch den Körper des Patienten verlaufende Achse aufweist,
- Mitteln (11-13, 62-68 zum Aufnehmen von Projektionsbildern des Körpers unter verschiedenen Orientierungen des Stativs zum Körper,
- Bildverarbeitungsmitteln (70) zum Erzeugen von tomographisch rekonstruierten Bildern aus den Projektionsbildern, wobei
- die Gammakamera im Gang der Gammastrahlen vom Körper des Patienten eine Kollimatorvorrichtung (11, eine Szintillatoreinrichtung (12) und ein Netz (13) von Photomultipliern aufweist,
- die Photomultiplier elektrische Signale liefern und der Gammatomograph ferner elektrische Schaltungen aufweist zum Erzeugen von Signalen (X+,X-), die die Projektionsbilder darstellen, aus den von den Photomultipliern gelieferten elektrischen Signalen,
- die Kollimatorvorrichtung ein System von langgestreckten Löchern umfaßt, die in einer Dicke eines für Gammastrahlen undurchlässigen Materials gebildet sind, dadurch gekennzeichnet, daß
- die Kollimatorvorrichtung einen Satz (14-16 aus mehreren Anordnungen von Löchern umfaßt, von denen jede Anordnung Reihen (17-24) von die Gammastrahlen fokussierenden Löchern umfassen, wobei die Löcher jeweils eine dem Körper nahe Basis (25) und einen dem Szintillator nahen Scheitel (26) aufweisen und die Querschnittsfläche der Basis eines Lochs kleiner als die des Scheitels ist,
- die Mitten der Basen zweier Löcher einander näher sind als die Mitten der Scheitel dieser Löcher,
- die Löcher jeweils eine durch die Mitten ihrer Basis oder ihres Scheitels verlaufende Hauptrichtung haben,
- die Hauptrichtungen der Löcher einer Reihe in derselben, quer zur Achse (7) des Stativs (4) liegenden Fokalebene (27, 28) liegen, wobei diese Fokalebene zusammen mit den Fokalebenen der anderen Reihen eine tomographische Scheibe bezüglich dieser Anordnung definiert.

**2.** Gammatomograph nach Anspruch 1, dadurch gekennzeichnet, daß die Hauptrichtungen der Löcher einer Reihe gemeinsam durch einen Brennpunkt (29) verlaufen, der in der Brennebene dieser Reihe in einem Abstand von der Szintillatoreinrichtung (30) liegt, der größer ist als der Abstand zwischen der Szintillatoreinrichtung und der Mitte des Körpers.

**3.** Gammatomograph nach Anspruch 2, dadurch gekennzeichnet, daß der Brennpunkt in einem Abstand von der Szintillatoreinrichtung liegt, der im wesentlichen gleich der Länge der Szintillatoreinrichtung in Richtung der Reihe ist.

**4.** Gammatomograph nach einem der Ansprüche 1 bis 3, dadurch gekennzeichnet, daß die Szintillatoreinrichtung umfaßt:

- einen Satz von Szintillatorstäben (58), die jeweils gegenüber einer Anordnung von Löchern und gemeinsam gegenüber einem Lichtleiter (59) angebracht sind,
- daß der Lichtleiter eine einzige Platte (59) aus einem für die vom Szintillator abgegebenen Lichtstrahlen transparenten Material umfaßt, und
- daß die Platte mit parallel zu den Anordnungen orientierten Rillen (60) versehen ist.

5. Gammatomograph nach Anspruch 4, dadurch gekennzeichnet, daß die Rillen des Lichtleitesr mit Magnesiumoxid gefüllt sind.

6. Gammatomograph nach einem der Ansprüche 1 bis 5, dadurch gekennzeichnet, daß
   - das Netz von Photomultipliern in Orientierungen (X, Y) ausgerichtet ist, wobei wenigstens eine dieser Orientierungen (x) senkrecht zur Achse des Tomographen liegt,
   - die Anordnungen der Reihen von Löchern jeweils einer Orientierung von in dieser Richtung angeordneten Photomultipliern gegenüberliegen,
   - die elektronischen Schaltungen Mittel umfassen zum Erzeugen eines Linienbilds (63) in Projektion der von der Scheibe kommenden Gammastrahlen.

7. Gammatomograph nach einem der Ansprüche 1 bis 6, dadurch gekennzeichnet, daß die Anordnungen von Löchern aus geformtem Blei (40-47) sind.

8. Gammatomograph nach einem der Ansprüche 1 bis 6, dadurch gekennzeichnet, daß die Anordnungen von Löchern Anordnungen von gewellten Blechen (53-57) umfassen.

9. Gammatomograph nach einem der Ansprüche 1 bis 6, dadurch gekennzeichnet, daß die Anordnungen von Löchern Anordnungen von gerillten Blechen (53-57) umfassen.

10. Gammatomograph nach einem der Ansprüche 1 bis 10, dadurch gekennzeichnet, daß er Mittel umfaßt, um das Stativ in Längsrichtung des Körpers bewegbar zu machen, so daß aus gerasterten Bildern von Scheiben aneinandergrenzende tomographische Schnittbilder erzeugt werden können.

**Claims**

1. Tomograph using gamma ray detection, including:

- a patient-carrying panel (1) for supporting a patient (2) to be examined,
- a gamma-ray camera (3) and a stand (4) carrying this gamma-ray camera, this stand having means (7) for rotating the gamma-ray camera about an axis passing through the body of the patient, and
- means (11-13, 62-68) for acquiring projected images of the body with different orientations of the stand with respect to the body,
- image processing means (70) for producing tomographic images reconstructed from these projected images,
- the gamma-ray camera having, on the path of the gamma rays from the body of the patient, a collimation device (11), a scintillation device (12) and a network (13) of photomultiplier tubes,
- these tubes delivering electrical signals, and the tomograph also having electronic circuits (62) for producing signals (X+, X-) representing projected images of the body of the patient from the electrical signals delivered by the tubes,
- the collimation device having a group of elongate holes produced through a thickness of a material opaque to gamma rays, characterised in that
- the collimation device has a set (14-16) of several arrangements of holes, each arrangement of holes having series (17-24) of holes focusing the gamma rays, the holes having a base (25), near the body, and a top (26), near the scintillator, the area of cross section of the base of a hole being smaller than that of its top,
- the middles of the bases of two neighbouring holes, in any two neighbouring series in an arrangement, being nearer to each other than the middles of the tops of these holes,
- the holes each having a principal direction passing through the middles of their base and top, and in that
- the principal directions of the holes in any one series are contained in the same focal plane (27, 28) transverse to the axis (7) of the stand (4), this focal plane defining, with the other focal planes of the other series in any one arrangement, a tomographic slice (10) relating to this arrangement.

2. Tomograph according to Claim 1, characterised in that the principal directions of the holes in any one series pass together through a focal point (29) situated, in the focal plane of this series, at a distance from the scintillation device (30) greater than the one separating this scintillation device from the middle of the body.

3. Tomograph according to Claim 2, characterised in that the focal point is situated at a distance from the scintillator which is substantially equal to the length (L) of this scintillation device measured in the direction of the series.

4. Tomograph according to any one of Claims 1 to 3, characterised in that the scintillation device includes
   - a set of scintillation bars (58) each disposed facing an arrangement of holes and disposed, together, facing a light pipe (59),
   - this light pipe having a single plate (59) made from a material transparent to the light rays emitted by the scintillator, and
   - this plate being provided with grooves (60) oriented parallel to the arrangements.

5. Tomograph according to Claim 4, characterised in that the grooves of the light pipe are filled with magnesia.

6. Tomograph according to any one of Claims 1 to 5, characterised in that
   - the network of photo-multiplier tubes is organized in alignments (X, Y), these alignments being arranged in at least one direction (X), perpendicular to the axis of the tomograph,
   - in that the arrangements of series of holes are each placed exactly facing an alignment of tubes arranged in this direction (X),
   - and in that the electronic circuits include means for producing a projected line image (63) of the gamma ray emissions coming from the slice.

7. Tomograph according to any one of Claims 1 to 6, characterised in that the arrangements of holes are made from cast lead (40-47).

8. Tomograph according to any one of Claims 1 to 6, characterised in that the arrangements of holes include assemblies of corrugated sheets (53-57).

9. Tomograph according to any one of Claims 1 to 6, characterised in that the arrangements of holes include assemblies of grooved sheets (48-52).

10. Tomograph according to any one of Claims 1 to 9, characterised in that it has means for making the stand longitudinally movable with respect to the body, in order to produce contiguous tomographic slice images from images of interlaced slices.

FIG_1

FIG_2-a

FIG_2-b

FIG_3-a

FIG_3-b

FIG_4

FIG_5

FIG_6

FIG_7